# EUROPÄISCHE PATENTANMELDUNG

(11) **EP 2 007 077 A1**
(43) Veröffentlichungstag der Anmeldung: **24.12.2008**
(21) Anmeldenummer: 08104273.1
(22) Anmeldetag: 05.06.2008
(51) Int. Cl.: H04L 12/403, H04L 29/12

(54) **Verfahren zum Ermitteln der Position von Slavegeräten in einer Reihenschaltung und Slavegerät für Reihenschaltung**

(30) Priorität: 22.06.2007 DE 102007028928
(71) Anmelder: SIEMENS AKTIENGESELLSCHAFT, 80333 München (DE)
(72) Erfinder: Fichtner, Norbert, 84069, Schierling (DE); Hoch, Peter, 93080, Pentling (DE); Langels, Hans-Joachim, 84085, Langquaid (DE); Schott, Franz, 93138, lappersdorf (DE); Stangl, Erwin, 93047, Regensburg (DE)

(57) **Zusammenfassung**

In einer Reihenschaltung aus Master und Slave, typischerweise mit Aktoren als Slaves, muss der Master die Slaves unter einer Adresse über ein Subbussystem ansprechen und gleichzeitig die Position der Slaves in der Reihenschaltung kennen. Die vorliegende Anmeldung ist mit der Ermittlung der Position befasst. Die Reihenschaltung umfasst eine Spannungsteilerschaltung, die bewirkt, dass in jedem Slave ein anderes Potential anliegt, das mit der Positionsnummer der Slaves in der Reihenschaltung sinkt, wenn eine vorbestimmte Messsituation hergestellt wird. Das Potential wird in der Messsituation gemessen, und aus dem Potential wird die Position abgeleitet.

## Beschreibung

Verfahren zum Ermitteln der Position von Slavegeräten in einer Reihenschaltung und Slavegerät für Reihenschaltung.

Die Erfindung betrifft ein Verfahren zum Ermitteln der Position von Slavegeräten in einer von einem Mastergerät ausgehenden Reihenschaltung. Ferner betrifft die Erfindung ein Slavegerät zur Verwendung in einer von einem Mastergerät ausgehenden Reihenschaltung von Slavegeräten, und sie betrifft auch eine Reihenschaltung mit Mastergerät und solchen Slavegeräten sowie eine Busanordnung mit einer solchen Reihenschaltung.

Reihenschaltungen aus Master- und Slavegeräten gibt es insbesondere bei Installationsgeräten. Typischerweise sind die Geräte Aktoren zur Ansteuerung eines an ihnen angeschlossenen elektrischen Verbrauchers, z. B. von Leuchten. Das Mastergerät kommuniziert mit den Slavegeräten. Hierzu muss es den Slavegeräten eindeutig zugeordnete Adressen kennen. Das Mastergerät kann an einem Bus einer Busanordnung angeschlossen sein und mit anderen Mastergeräten kommunizieren und hierbei Einfluss auf weitere Slavegeräte nehmen. Durch die Kenntnis der Slavegeräte-Adressen wird zunächst rein formal eine Bedingung für die Kommunikation erfüllt. Bei realen Systemen muss dem Master auch bekannt sein, an welcher Position in der Reihenschaltung sich das Slavegerät mit einer bestimmten Adresse befindet. Grund hierfür ist, dass an dem Slavegerät seinerseits zumindest ein anderes Gerät, z. B. der oben genannte elektrische Verbraucher (Leuchte), angeschlossen wird, und dass das Mastergerät wissen muss, welchen elektrischen Verbraucher es mittelbar über das zugehörige Slavegerät ansteuert. Um die Position der Slavegeräte zu kennen, wird bisher an den Slavegeräten ein Schiebeschalter ("Dual Inline") vorgesehen, mit Hilfe dessen eine Installateursperson die Positionsnummer des Slavegeräts einstellen kann. Wünschenswert wäre es, wäre der Installationsperson die Aufgabe der Einstellung der Positionsnummer abgenommen. Dadurch könnte auch menschliches Versagen diesbezüglich verhindert werden.

In der DE 69710635 T2 ist eine automatische Adressierung in einer Gefahrenmeldeanlage beschrieben, bei der mehrere Module in einer Reihenschaltung miteinander verkoppelt sind, wobei das erste der Module eine Zentraleinheit ist und die anderen Module Eingangs- Ausgangs-Module sind, welche eine Vielzahl von Funktionen aufweisen. An der Zentraleinheit gibt es eine konstante Stromquelle, und es wird ein Zyklus von Spannungsmessungen durchgeführt. Bei den Spannungsmessungen wird nach und nach das jeweils nächste Modul mit unbekannter Adresse ermittelt, das den Modulen mit bisher bekannter Adresse am nächsten liegt. Sequentiell werden bestimmte Transistoren ausgeschaltet, nämlich die Transistoren in denjenigen Modulen, deren Adresse bereits ermittelt wurde. Das jeweils am nächsten an der Zentraleinheit gelegene Modul misst eine Spannung von 0,47 V Gleichspannung, wobei alle anderen Module eine Messung von 0 V an ihren Erfassungsleitungen ergeben. Es wird also jeweils ein bestimmtes Potential gemessen. Dieses Potential ist aber stets dasselbe Potential. Es ist jedes Mal ein anderes Modul, an dem dieses Potential gemessen wird, weil nach und nach die einzelnen Transistoren ausgeschaltet werden.

Die US 6,094,053 A offenbart ein Verfahren zum Zuteilen von Adressen zu elektronischen Modulen. Jedem elektronischen Modul ist eine Batterie zugeordnet. Es werden nun jeweils ausgesuchte Schalter betätigt. In jedem elektronischen Modul wird ein Potential gemessen. Es wird bei bestimmten für die Anordnung geltenden Größen unterschieden zwischen solchen elektronischen Modulen, bei denen das gemessene Potential unterhalb von 2,5 V liegt, und zwischen Modulen, bei denen das gemessene Potential oberhalb von 2,5 V liegt. Dies ermöglicht die Einteilung der elektronischen Module in zwei Gruppen, denen eine gemeinsame Adresse zugewiesen wird. In einer Folge von gleichartigen Durchgängen kann nun zu jeder Gruppe eine Untergruppe gebildet werden, bis schließlich für jedes einzelne elektronische Modul eine eigene Adresse bereitgestellt ist.

Nachteilig an den aus der DE 69710635 T2 und der US 6,094,053 A beschriebenen Verfahren zum Zuteilen von Adressen ist, dass jeweils eine aufwendige Schrittfolge unter Veränderung der Schaltungsbedingungen durchgeführt werden muss.

Es ist Aufgabe der Erfindung, eine einfachere Lösung zur Feststellung der Position des Slavegeräts in einer Reihenschaltung aus Slavegeräten bereitzustellen.

Die Aufgabe wird durch ein Verfahren nach Patentanspruch 1, ein Slavegerät nach Patentanspruch 6, eine Reihenschaltung nach Patentanspruch 8 und eine Busanordnung nach Patentanspruch 9 gelöst.

Das erfindungsgemäße Verfahren zum Ermitteln der Position von Slavegeräten in einer von einem Mastergerät ausgehenden Reihenschaltung umfasst die Schritte:
a) Verwenden von Slavegeräten in der Reihenschaltung, wobei jedes Slavegerät einen Potentialeingang (Ei) zum Empfangen eines Potentials von einem in der Reihenschaltung vorausgehenden Gerät und einen Potentialausgang (Ai) zum Weiterleiten eines Potentials an ein in der Reihenschaltung nachfolgendes Gerät aufweist, wobei zwischen Potentialeingang (Ei) und Potentialausgang (Ai) ein Widerstand (R1) angeordnet ist, wobei jedes Slavegerät Mittel (M) zum Messen des Potentials am Potentialeingang (Ei), am Potentialausgang (Ai) oder an einem definierten Punkt zwischen Potentialeingang (Ei) und Potentialausgang (Ai) aufweist, und wobei die Reihenschaltung durch Verbindung des Potentialeingangs jedes der Slavegeräte mit dem Potentialausgang des in der Reihenschaltung vorausgehenden Geräts gebildet ist und eine Messsituation erzeugt wird, in der an einem Potentialausgang des Mastergeräts ein Potential anliegt, so dass an jedem Slavegerät ein gegenüber dem in der Reihenschaltung vorausgehenden Gerät niedrigeres Potential anliegt, und für jedes Slavegerät:
b) Messen des an dem Slavegerät anliegenden Potentials in der Messsituation mit den Mitteln zum Messen des Slavegeräts,
c) Ableiten der Position(snummer) des Slavegeräts aus dem gemessenen Potential.

Bei einer bevorzugten Ausführungsform des Verfahrens führt das Slavegerät die Auswertung des Messwerts durch und teilt die im Rahmen der Auswertung abgeleitete Position dem Mastergerät mit. Entweder sind in dem Slavegerät bereits vorab Wertebereiche für das Potential für unterschiedliche Positionen gespeichert, oder das Mastergerät berechnet anhand der ihm bekannten Anzahl der Slavegeräte in der Reihenschaltung Wertbereiche für das Potential für unterschiedliche Positionen und teilt diese Wertebereiche vor Schritt c) den Mitteln zum Auswerten des jeweiligen Slavegeräts mit.

Alternativ kann die Auswertung durch das Mastergerät durchgeführt werden. In diesem Fall muss der Messwert für das Potential dem Mastergerät mitgeteilt werden.

Die Erfindung beruht auf der Erkenntnis, dass nicht wie im Stand der Technik eine Mehrzahl von Messschritten durchgeführt werden muss, bis eine Adressvergabe möglich ist. Vielmehr lässt sich bei geeigneter Wahl der Slavegeräte eine Messsituation schaffen, in der an einem Potentialausgang des Mastergeräts ein Potential anliegt, und wobei an jedem Slavegerät ein für dieses Slavegerät spezifisches Potential anliegt, weil nämlich das an jedem Slavegerät anliegende Potential niedriger als das an dem in der Reihenschaltung vorausgehenden Gerät anliegende Potential ist. Durch Messung des Potentials kann daher auf die Position des Slavegeräts in der Reihenschaltung zurückgeschlossen werden, d.h. selbige aus dem Messwert abgeleitet werden.

Das erfindungsgemäße Slavegerät umfasst einen Potentialeingang zum Empfangen eines Potentials von einem in der Reihenschaltung vorausgehenden Gerät und einen Potentialausgang zum Weiterleiten eines Potentials an ein in der Reihenschaltung nachfolgendes Gerät, wobei zwischen Potentialeingang und Potentialausgang ein Widerstandselement (kurz: Widerstand) angeordnet ist. Das Slavegerät weist nun Mittel zum Messen eines für seine Position charakteristischen Potentials auf. Hierzu wird das Potential am Potentialausgang verwendet.

Die Potentialmessung erfolgt als Spannungsmessung gegenüber Masse. Hierzu wird der Potentialausgang in dem Slavegerät über einen Widerstand mit Masse verbunden, und die Mittel zum Messen messen einfach die an dem Widerstand abfallende Spannung.

Bei Verwendung gleichartiger Slavegeräte ist das Potential, das von den Mitteln zum Messen des Potentials in einem bestimmten Slavegerät gemessen wird, durch seine Position in der Reihenschaltung genau definiert. Am ersten Slavegerät in der Reihenschaltung (hinter dem Mastergerät) liegt ein höheres Potential an als am zweiten Slave, an diesem ein höheres als am dritten Slave etc.

Bei der Erfindung weist das Slavegerät selbst Mittel zum Auswerten der von dem Mittel zum Messen gemessenen Potentials auf. Erfindungsgemäß sind die Widerstände insgesamt so gewählt, dass zu jeder Position des Slavegeräts in einer Reihenschaltung mit gleichartigen Slavegeräten in einer Messsituation, in der an einem Potentialausgang des Mastergerätes ein Potential anliegt, so dass an jedem Slavegerät ein gegenüber dem in der Reihenschaltung vorausgehenden Gerät niedrigeres Potential anliegt, ein eindeutiger Wertbereich für das zu messende Potential definiert ist, der von der Zahl in der Reihenschaltung nachfolgenden Slavegeräte (zumindest bis hin zu einer Maximalzahl, wenn nicht überhaupt) unabhängig ist. Dieser Wertbereich ist in den Mitteln zum Auswerten bereits vorab gespeichert. Durch die Mittel zum Auswerten kann dann aufgrund des gemessenen Potentials die Position des Slavegeräts eindeutig abgeleitet werden.

Der den Potentialausgang mit dem Slavegerät verbindende Widerstand sollte möglichst groß gewählt werden im Verhältnis zu dem zwischen Potentialeingang und Potentialausgang liegenden Widerstand. Je größer das Verhältnis dieser beiden Widerstandswerte, für desto mehr Slaves in der Reihenschaltung kann der jeweilige Wertbereich vorab festgelegt werden. Mit anderen Worten: Je größer die Maximalzahl der Slaves sein soll, desto größer wird der Widerstand zwischen Potentialausgang und Masse gewählt bzw. desto kleiner der Widerstand zwischen Potentialeingang und Potentialausgang, damit ein Wertbereich für das Potential eindeutig definierbar ist.

Wenn nun, wie erläutert, das Slavegerät selbst eine Position aufgrund der Messung des Potentials mit Hilfe der Mittel zum Auswerten ermittelt, sollte es auch noch Mittel zum Mitteilen einer so ermittelten Position des Slavegeräts an das Mastergerät umfassen. Regelmäßig werden die Mittel zum Auswerten und die Mittel zum Mitteilen einen an einem Kommunikationsbus (Subbus) anschließbaren Mikroprozessor umfassen.

Es ist bei einer anderen Alternative auch möglich, dass das Slavegerät Mittel zum Mitteilen des von den Mitteln zum Messen gemessenen Potentials an das Mastergerät umfasst. In diesem Falle wird das Mastergerät selbst das gemessene Potential auswerten. Diese Ausführungsform ist insbesondere dann vorteilhaft, wenn die Anzahl der für die Reihenschaltung vorzusehenden Slavegeräte vorab ungewiss ist und die Wertebereiche für das Potential an den einzelnen Slavegeräten stark mit der tatsächlichen Anzahl schwanken.

Zur Erfindung gehört auch eine Reihenschaltung aus einem Mastergerät mit zumindest einem erfindungsgemäßen Slavegerät. Diese Reihenschaltung kann insbesondere in einer Busanordnung verwendet werden, wobei lediglich das Mastergerät an dem Bus angeschlossen ist und die Reihenschaltung ansonsten einen Subbus umfasst bzw. bildet.

Nachfolgend wird eine bevorzugte Ausführungsform der Erfindung unter Bezug auf die Zeichnung beschrieben, wobei
- FIG 1: schematisch die Grundelemente einer Reihenschaltung mit erfindungsgemäßen Slavegeräten darstellt und
- FIG 2: ein erfindungsgemäßes Slavegerät schematisch mit über FIG 1 hinausgehenden Details darstellt.

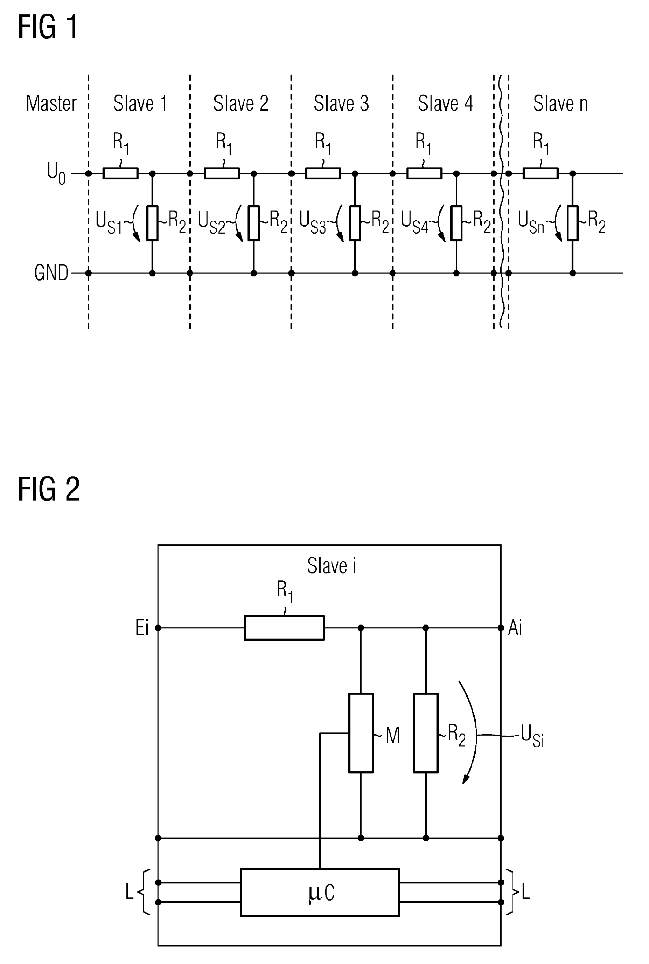

Einem Mastergerät "Master" ist eine Vielzahl von Slaves in einer Reihenschaltung nachgeordnet, wobei in FIG 1 die Slavegeräte als "Slave 1", "Slave 2", "Slave 3" etc. bis "Slave n" durchnummeriert sind. "Slave n" ist ein Slavegerät an der n-ten Position mit n > 4.

Jedes Slavegerät weist einen Potentialeingang auf, für Slavegerät "Slave i" in FIG 2 mit "Ei" bezeichnet, und jedes Slavegerät weist einen Potentialausgang auf, in FIG 2 mit "Ai" bezeichnet. Zwischen Potentialeingang Ei und Potentialausgleich Ai ist jeweils ein Widerstand R1 angeordnet. Der Widerstand ist für alle Slaves gleich. Der Potentialausgang Ai ist über einen Widerstand R2 mit Masse "GND" verbunden. Bei Anlegen eines Potentials U₀ am Potentialausgang des Mastergeräts wird eine Messsituation geschaffen. In dieser fällt am Widerstand R2 von Slave 1 die Spannung U_{S1} < U₀ ab, am Widerstand R2 von Slave 2 die Spannung U_{S2} < U_{S1} ab, etc. Am Widerstand R2 von Slave n fällt die Spannung U_{Sn} ab.

Wie in FIG 2 zu sehen, umfasst der Slave i Mittel zum Messen M der in dem Slave i abfallenden Spannung U_{Si}. Die Mittel zum Messen M teilen den Messwert einem zentralen Mikroprozessor µC mit, der über eine Busleitung L, gegebenenfalls mittelbar über vorausgehende Slaves, mit dem Master verbunden ist (in FIG 1 nicht gezeigt).

Die Spannung U_{Si}, die am Slave i abfällt ist, zumindest bei vorgegebener Gesamtzahl von Slaves in der Reihenschaltung, von der Position i des Slaves abhängig. Aus U_{Si} kann daher direkt auf die Position zurückgeschlossen werden. Entweder tut dies der Mikroprozessor µC im Slave i selbst, oder der Mikroprozessor leitet den Messwert, den die Mittel zum Messen M ermittelten, über die Busleitung L an den Master weiter, der den Messwert auswertet. Der Master erfährt von dem Slave i dessen Position oder ermittelt sie selbst aufgrund des ihm übermittelten Messwerts und ordnet so der Adresse des Slaves i auch die Position zu. Der Master weiß nachfolgend, welche Position der jeweilige Slave hat, den er unter dieser Adresse anspricht. Sind die Slaves beispielsweise Aktoren für Leuchten, so ist der Position eines Slaves auch eine bestimmte Leuchte zugeordnet, so dass der Master nunmehr auch weiß, mit welcher Adresse er welche Leuchte mittelbar über den zugehörigen Aktor (Slave) ansprechen kann.

Bezugszeichenliste
- Ai: Potentialausgang
- Ei: Potentialeingang
- GND: Masse
- L: Busleitung
- M: Mittel zum Messen
- R1, R2: Widerstände
- U₀, U_{S1}, U_{S2}, U_{Sn}, U_{Si}: Spannungen
- µC: Mikroprozessor

## Patentansprüche

1. Verfahren zum Ermitteln der Position von Slavegeräten in einer von einem Mastergerät ausgehenden Reihenschaltung, mit den Schritten:
a) Verwenden von Slavegeräten in der Reihenschaltung, wobei jedes Slavegerät einen Potentialeingang (Ei) zum Empfangen eines Potentials von einem in der Reihenschaltung vorausgehenden Gerät und einen Potentialausgang (Ai) zum Weiterleiten eines Potentials an ein in der Reihenschaltung nachfolgendes Gerät aufweist, wobei zwischen Potentialeingang (Ei) und Potentialausgang (Ai) ein Widerstand (R1) angeordnet ist, wobei jedes Slavegerät Mittel (M) zum Messen des Potentials am Potentialeingang (Ei), am Potentialausgang (Ai) oder an einem definierten Punkt zwischen Potentialeingang (Ei) und Potentialausgang (Ai) aufweist, und wobei die Reihenschaltung durch Verbindung des Potentialeingangs jedes der Slavegeräte mit dem Potentialausgang des in der Reihenschaltung vorausgehenden Geräts gebildet ist und eine Messsituation erzeugt wird, in der an einem Potentialausgang des Mastergeräts ein Potential anliegt, so dass an jedem Slavegerät ein gegenüber dem in der Reihenschaltung vorausgehenden Gerät niedrigeres Potential anliegt,
und
für jedes Slavegerät:
b) Messen des an dem Slavegerät anliegenden Potentials in der Messsituation mit den Mitteln (M) zum Messen des Slavegeräts,
c) Ableiten der Position des Slavegeräts aus dem gemessenen Potential.

2. Verfahren nach Anspruch 1, bei dem in Schritt a) Slavegeräte verwendet werden, die Mittel (µC) zum Auswerten des von den Mitteln (M) zum Messen gemessenen Potentials und Mittel (µC) zum Auswerten des von den Mitteln (M) zum Messen gemessenen Potentials aufweisen, bei dem Schritt c) durch die Mittel (µC) zum Auswerten des jeweiligen Slavegeräts durchgeführt wird, und bei dem in einem Schritt d) das jeweilige Slavegerät die abgeleitete Position dem Mastergerät mitteilt.

3. Verfahren nach Anspruch 2, bei dem das Mastergerät Wertebereiche für das Potential für unterschiedliche Positionen berechnet und vor Schritt c) den Mitteln (µC) zum Auswerten des Slavegeräts mitteilt.

4. Verfahren nach Anspruch 2, bei dem in allen Slavegeräten Wertebereiche für das Potential für unterschiedliche Positionen gespeichert sind.

5. Verfahren nach Anspruch 1, bei dem in Schritt a) Slavegeräte verwendet werden, die Mittel (µC, L) zum Mitteilen des von den Mitteln (M) zum Messen gemessenen Potentials an das Mastergerät aufweisen, bei dem zwischen Schritt b) und c) die Mittel zum Mitteilen des jeweiligen Slavegeräts das gemessene Potential dem Mastergerät mitteilen, und bei dem Schritt c) durch das Mastergerät durchgeführt wird.

6. Slavegerät zur Verwendung in einer von einem Mastergerät ausgehenden Reihenschaltung von Slavegeräten, mit einem Potentialeingang (Ei) zum Empfangen eines Potentials von einem in der Reihenschaltung vorausgehenden Gerät und einem Potentialausgang (Ai) zum Weiterleiten eines Potentials an ein in der Reihenschaltung nachfolgendes Gerät, wobei zwischen Potentialeingang (Ei) und Potentialausgang (Ai) ein Widerstand (R1) angeordnet ist, wobei das Slavegerät Mittel (M) zum Messen des Potentials am Potentialausgang (Ai) sowie Mittel (µC) zum Auswerten des von den Mitteln (M) zum Messen gemessenen Potentials aufweist, wobei der Potentialausgang (Ai) in dem Slavegerät über einen Widerstand (R2) mit Masse verbunden ist und die Mittel (M) zum Messen die an diesem Widerstand (R2) abfallende Spannung (U_{Si}) messen, **dadurch gekennzeichnet, dass** sämtliche Widerstände (R1, R2) so gewählt sind, dass zu jeder Position des Slavegeräts in einer Reihenschaltung mit gleichartigen Slavegeräten in einer Messsituation, in der an einem Potentialausgang des Mastergeräts ein Potential anliegt, so dass an jedem Slavegerät ein gegenüber dem in der Reihenschaltung vorausgehenden Gerät niedrigeres Potential anliegt, ein eindeutiger Wertbereich für das zu messende Potential definiert ist, der von der Zahl der in der Reihenschaltung nachfolgenden Slavegeräte bis hin zu einer Maximalzahl unabhängig ist und in den Mitteln (µC) zum Auswerten gespeichert ist, so dass durch die Mittel (µC) zum Auswerten aufgrund des gemessenen Potentials die Position des Slavegeräts eindeutig ableitbar ist.

7. Slavegerät nach Anspruch 6, bei dem das Slavegerät Mittel (µC, L) zum Mitteilen des von den Mitteln (M) zum Messen gemessenen Potentials an das Mastergerät aufweist.

8. Reihenschaltung aus einem Mastergerät mit zumindest einem Slavegerät nach Anspruch 6 oder 7.

9. Busanordnung mit zumindest einer Reihenschaltung nach Anspruch 8, bei der nur das Mastergerät an einem Bus angeschlossen ist.
